# EUROPEAN PATENT APPLICATION

(11) **EP 3 267 422 A1**
(43) Date of publication of application: **10.01.2018**
(21) Application number: 16758829.2
(22) Date of filing: 25.02.2016
(51) Int. Cl.: G08G 3/00, B63B 49/00, B63H 25/42, G01S 17/88

(54) **SHIP**

(30) Priority: 03.03.2015 JP 2015041337
(71) Applicant: Yanmar Co., Ltd., Osaka-shi, Osaka 530-8311 (JP)
(72) Inventor: HITACHI Junichi, Osaka-shi Osaka 530-8311 (JP); KANDA Kouichi, Osaka-shi Osaka 530-8311 (JP)
(74) Representative: Kuhnen & Wacker
(86) International application number: PCT/JP2016/055631
(87) International publication number: WO 2016/140135

(57) **Abstract**

The present invention addresses the problem of providing a ship that can recognize the correct position of itself on the sea. A ship (100) comprises a recognition controller (160) that recognizes the position of the ship on the sea, the recognition controller (160) recognizing the position of the ship on the sea on the basis of relative distances between the ship (100) and a plurality of land-based targets. The recognition controller (160) captures an image (P1) of a structure (S1) and an image (P2) of a structure (S2) by using a first camera (161) and a second camera (162), respectively, and maneuvers the ship such that the sizes of the captured image (P1) and image (P2) do not change and thereby maintains a fixed point on the sea.

## Description

### Technical Field

The present invention relates to an art of recognition of a positon of a ship.

### Background Art

Conventionally, as a position recognition means for a position a ship on the sea, a Global Positioning System (GPS) is known (for example, see the Patent Literature 1). Conventionally, based on GPS information, operation of a ship such as fixed point holding or automatic docking on the sea is performed.

However, a precision error of GPS information or precision error of map information stored previously may make it difficult to determine an accurate position of the ship itself on the sea.

### Prior Art Reference

### Patent Literature

Patent Literature 1: the Japanese Patent Laid Open Gazette 2013-28296

### Disclosure of Invention

### Problems to Be Solved by the Invention

A problem to be solved by the present invention is to provide a ship in which an accurate position of the ship itself on the sea can be recognized.

### Means for Solving the Problems

A ship of the present invention has a recognition means for a position of the ship itself on sea, and preferably, the recognition means recognizes the position of the ship itself on the sea based on relative distances between the ship and a plurality of land-based targets.

According to the ship of the present invention, the recognition means photographs images of the plurality of the land-based targets by a plurality of cameras, and by operating the ship so as to maintain sizes of the plurality of the photographed images, fixed point holding on the sea is performed.

According to the ship of the present invention, the recognition means measures distances to the plurality of the land-based targets by a plurality of distance sensors, and by operating the ship so as to maintain the plurality of the measured distances, fixed point holding on the sea is performed.

### Effect of the Invention

According to the ship of the present invention, the accurate position of the ship itself on the sea can be recognized.

### Brief Description of Drawings

[Fig. 1] Fig. 1 is a Fig. 1 is a block diagram of an apparatus configuration of a ship of a first embodiment.
[Fig. 2] Fig. 2 is a flow chart of fixed point holding control.
[Fig. 3] Fig. 3 is a schematic drawing of a function of the fixed point holding control.
[Fig. 4] Fig. 4 is a block diagram of an apparatus configuration of a ship of a second embodiment.
[Fig. 5] Fig. 5 is a flow chart of another embodiment of fixed point holding control.
[Fig. 6] Fig. 6 is a schematic drawing of a function of the fixed point holding control.

### Detailed Description of the Invention

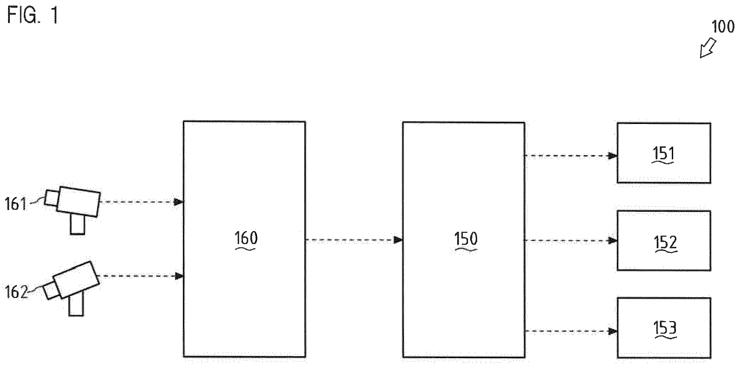

Referring to Fig. 1, an apparatus configuration of a ship 100 is explained.

In Fig. 1, the apparatus configuration of the ship 100 is shown schematically by a block diagram.

The ship 100 is a first embodiment according to the ship of the present invention. The ship 100 of this embodiment is not limited especially and may be a leisure boat, a fishing boat or the like. The ship 100 has a ship operation controller 150 and a recognition controller 160 as a recognition means.

The ship operation controller 150 operates or steers the ship 100. The ship operation controller 150 is connected to an Engine Control Unit (hereinafter, referred to as ECU) 151 controlling rotation speed of an engine driving a screw propeller, a thruster controller 152 controlling rotation speed of a motor driving a thruster, and a hydraulic circuit 153 controlling a position of a hydraulic cylinder driving a rudder.

The thruster of this embodiment is a bow thruster or a stem thruster. The ship 100 of the present invention may have a propulsion device of stem drive type, POD type, or an outboard motor or the like.

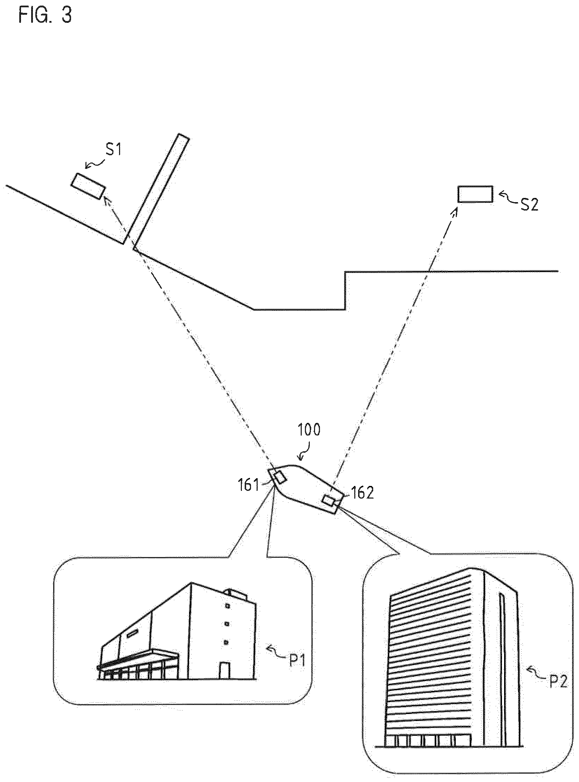

The recognition controller 160 recognizes a position of the ship 100 on the sea. The recognition controller 160 is connected to a first camera 161, a second camera 162 and the ship operation controller 150. The first camera 161 is provided in a front part of a hull. The second camera 162 is provided in a rear part of the hull (see Fig. 3).

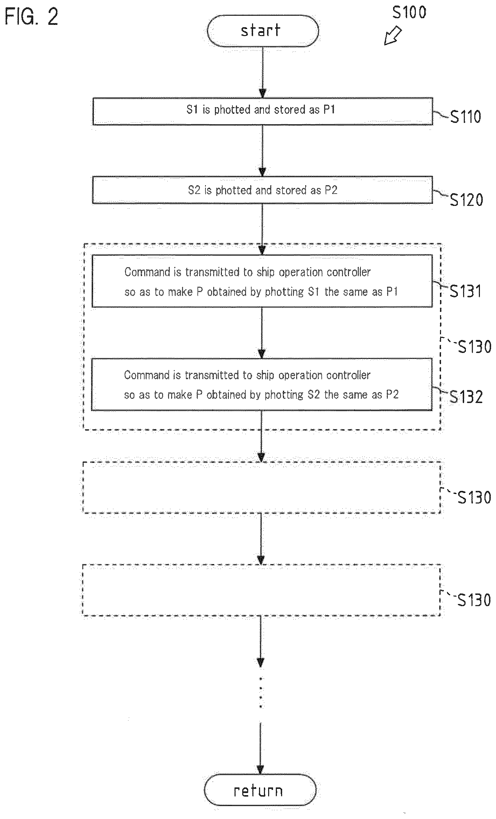

Referring to Fig. 2, a flow of a fixed point holding control S 100 is explained.

In Fig. 2, the flow of the fixed point holding control S 100 is shown by a flow chart.

In the fixed point holding control S100, an image of a structure S1 is photographed by the first camera 161, an image of a structure S2 is photographed by the second camera 162, and the ship is operated so as to maintain sizes of the photographed images of the structure S1 and the structure S2, whereby the fixed point holding of the ship 100 is performed on the sea.

In a step S110, the recognition controller 160 photographs an image P of the structure S 1 as a land-based target by the first camera 161 and stores as an image P1.

In a step S120, the recognition controller 160 photographs the image P of the structure S2 as another land-based target by the second camera 162 and stores as an image P2.

In a step S131, the recognition controller 160 photographs the image P of the structure S1 by the first camera 161 again, and transmits a command to the ship operation controller 150 and operates the ship 100 so as to make a size of the photographed image P the same as that of the stored image P1.

In a step S132, the recognition controller 160 photographs the image P of the structure S2 by the second camera 162 again, and transmits the command to the ship operation controller 150 and operates the ship 100 so as to make the size of the photographed image P the same as that of the stored image P2.

Hereinafter, the recognition controller 160 performs the fixed point holding of the ship 100 while repeating a step S130 (step S131 and step S 132) for every predetermined time.

Referring to Fig. 3, a function of the fixed point holding control S100 is explained.

In Fig. 3, the function of the fixed point holding control S 100 is shown schematically.

In the step S110, the image P of the structure S 1 is photographed by the first camera 161 and stored as the image P1. In the step S120, the image P of the structure S2 is photographed by the second camera 162 and stored as the image P2.

In the step S 131, he image P of the structure S 1 is photographed by the first camera 161 again, and a command is transmitted to the ship operation controller 150 and the ship 100 is operated so as to make the size of the photographed image P the same as that of the stored image P1.

In this case, the ship 100 is operated so as to make a relative distance to the structure S 1 the same as that to a point at which the image P1 is photographed (step S 110).

In the step S132, he image P of the structure S2 is photographed by the second camera 162 again, and a command is transmitted to the ship operation controller 150 and the ship 100 is operated so as to make the size of the photographed image P the same as that of the stored image P2.

In this case, the ship 100 is operated so as to make a relative distance to the structure S2 the same as that to a point at which the image P2 is photographed (step S120). Namely, the ship 100 is held at the position at which the image P1 and the image P2 are photographed (step S110 and step S120).

An effect of the ship 100 is explained.

According to the ship 100, an accurate position of the ship 100 on the sea can be recognized so as to perform the fixed point holding.

In this embodiment, the position of the ship 100 on the sea is recognized by the recognition controller 160, the first camera 161 and the second camera 162 so as to perform the fixed point holding. However, the configuration is not limited thereto, and for example, it may alternatively be configured that the position of the ship 100 on the sea is recognized and automatic docking is performed.

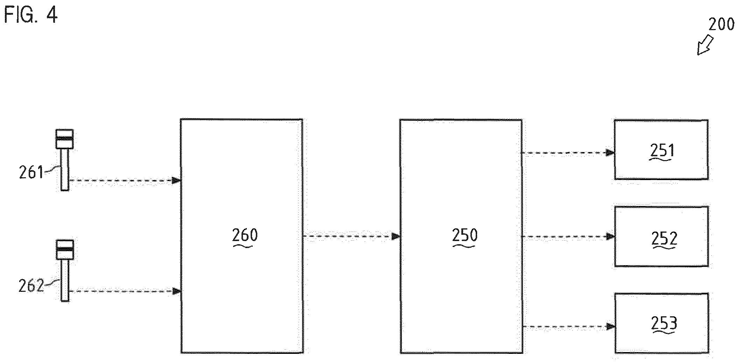

Referring to Fig. 4, an apparatus configuration of a ship 200 is explained.

In Fig. 4, the apparatus configuration of the ship 200 is shown schematically by a block diagram.

The ship 200 is a second embodiment according to the ship of the present invention. The ship 200 of this embodiment is not limited especially and may be a leisure boat, a fishing boat or the like. The ship 200 has a ship operation controller 250 and a recognition controller 260 as the recognition means.

The ship operation controller 250 operates or steers the ship 200. The ship operation controller 250 is connected to an ECU 251 controlling rotation speed of an engine driving a screw propeller, a thruster controller 252 controlling rotation speed of a motor driving a thruster, and a hydraulic circuit 253 controlling a position of a hydraulic cylinder driving a rudder.

The recognition controller 260 recognizes a position of the ship 200 on the sea. The recognition controller 260 is connected to a first distance sensor 261, a second distance sensor 262 and the ship operation controller 250. The first distance sensor 261 is provided in a front part of a hull. The second distance sensor 262 is provided in a rear part of the hull.

The first distance sensor 261 and the second distance sensor 262 may be provided in any positon which is not interrupted by an obstacle, such as a cabin of the hull.

The first distance sensor 261 and the second distance sensor 262 emit infrared light to a subject, detect the light reflected by the subject, and calculate a distance to the subject based on arrival time of the reflected light. The first distance sensor 261 and the second distance sensor 262 can be rotated for 360° so as to confirm subjects of all directions.

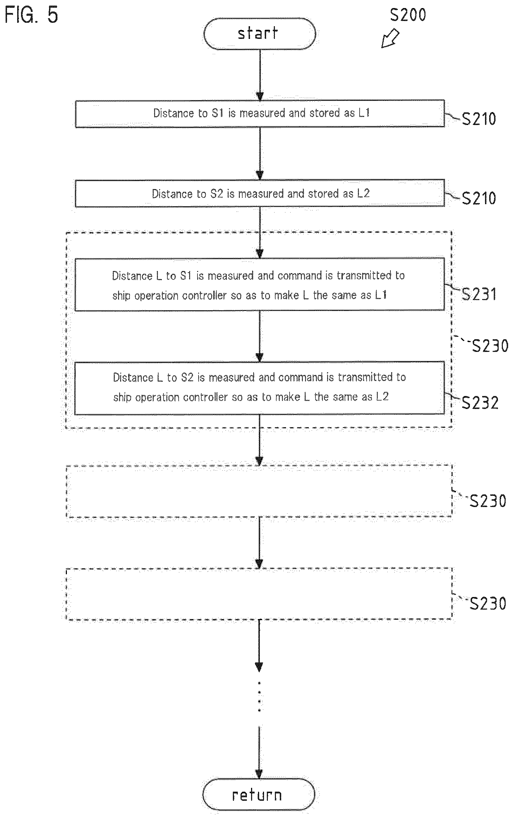

Referring to Fig. 5, a flow of a fixed point holding control S200 is explained.

In Fig. 5, the flow of the fixed point holding control S200 is shown by a flow chart.

In the fixed point holding control S200, a distance L1 to the structure S1 is measured by the first distance sensor 261, a distance L2 to the structure S2 is measured by the second distance sensor 262, and the ship is operated so as to maintain the distance L1 and the distance L2, whereby the fixed point holding of the ship 200 is performed on the sea.

In a step S210, the recognition controller 260 measures a distance L to the structure S1 as the land-based target by the first distance sensor 261, and stores the distance L as the distance L1.

In a step S220, the recognition controller 260 measures the distance L to the structure S2 as the land-based target by the second distance sensor 262, and stores the distance L as the distance L2.

In a step S231, the recognition controller 260 measures the distance L to the structure S1 by the first distance sensor 261 again, and transmits a command to the ship operation controller 250 and operates the ship 200 so as to make the measured distance L the same as the stored distance L1.

In a step S232, the recognition controller 260 measures the distance L to the structure S2 by the second distance sensor 262 again, and transmits a command to the ship operation controller 250 and operates the ship 200 so as to make the measured distance L the same as the stored distance L2.

Hereinafter, the recognition controller 260 performs the fixed point holding of the ship 200 while repeating a step S230 (step S231 and step S232) for every predetermined time.

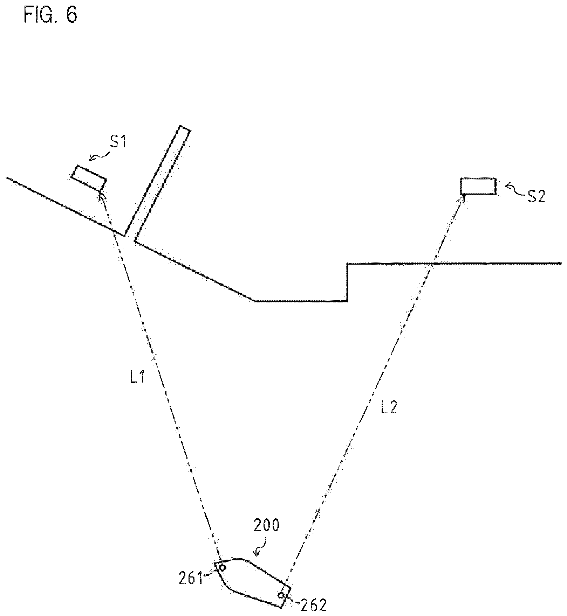

Referring to Fig. 6, a function of the fixed point holding control S200 is explained.

In Fig. 6, the function of the fixed point holding control S200 is shown schematically.

In the step S210, the distance L to the structure S1 is measured by the first distance sensor 261 and stored as the distance L1. In the step S220, the distance L to the structure S2 is measured by the second distance sensor 262 and stored as the distance L2.

In the step S231, the distance L to the structure S1 is measured by the first distance sensor 261 again, and the command is transmitted to the ship operation controller 250 and the ship 200 is operated so as to make the measured distance L the same as the stored distance L1.

In the step S232, the distance L to the structure S2 is measured by the second distance sensor 262 again, and the command is transmitted to the ship operation controller 250 and the ship 200 is operated so as to make the measured distance L the same as the stored distance L2.

In this case, the ship 200 is held at the position at which the distance L1 and the distance L2 are measured (step S210 and step S220).

An effect of the ship 200 is explained.

According to the ship 200, an accurate position of the ship 200 on the sea can be recognized so as to perform the fixed point holding.

In this embodiment, the position of the ship 200 on the sea is recognized by the recognition controller 260, the first distance sensor 261 and the second distance sensor 262 so as to perform the fixed point holding. However, the configuration is not limited thereto, and for example, it may alternatively be configured that the position of the ship 200 on the sea is recognized and automatic docking is performed.

### Industrial Applicability

The present invention can be used for a ship. Description of Notations

- 100: ship
- 150: ship operation controller
- 160: recognition controller
- 161: first camera
- 162: second camera

## Claims

1. A ship comprising
a recognition means structured to recognize a position of the ship itself on sea, and
wherein the recognition means structured to recognize the position of the ship itself on the sea based on relative distances between the ship and a plurality of land-based targets.

2. The ship according to claim 1, wherein
the recognition means is structured to photograph images of the plurality of the land-based targets by a plurality of cameras, and performs fixed point holding on the sea wherein the ship operation controller is structured to control the ship so as to maintain sizes of the plurality of the photographed images.

3. The ship according to claim 1, wherein
the recognition means is structured to measure distances to the plurality of the land-based targets by a plurality of distance sensors, and wherein the ship operation controller is structured to control the ship so as to maintain the plurality of the measured distances.
